# EUROPÄISCHE PATENTSCHRIFT

(11) **EP 3 871 377 B1**
(45) Veröffentlichungstag und Bekanntmachung des Hinweises auf die Patenterteilung: **05.10.2022**
(21) Anmeldenummer: 19805922.2
(22) Anmeldetag: 13.11.2019
(51) Int. Cl.: H04L 12/40, H04L 12/66, H04L 49/9057

(54) **VERTEILERKNOTEN, AUTOMATISIERUNGSNETZWERK UND VERFAHREN ZUM ÜBERTRAGEN VON TELEGRAMMEN**
DISTRIBUTOR NODE, AUTOMATION NETWORK AND METHOD FOR TRANSMITTING TELEGRAMS
NOEUD DE DISTRIBUTION, RÉSEAU D'AUTOMATISATION ET PROCÉDÉ DE TRANSMISSION DE TÉLÉGRAMMES

(30) Priorität: 26.11.2018 DE 102018129809
(43) Veröffentlichungstag der Anmeldung: 01.09.2021
(73) Patentinhaber: Beckhoff Automation GmbH, 33415 Verl (DE)
(72) Erfinder: BECKHOFF, Hans, 33415 Verl (DE); BÜTTNER, Holger, 12157 Berlin (DE); JANSSEN, Dirk, 33415 Verl (DE)
(74) Vertreter: Patentanwaltskanzlei WILHELM & BECK
(86) Internationale Anmeldenummer: PCT/EP2019/081190
(87) Internationale Veröffentlichungsnummer: WO 2020/108998

(56) Entgegenhaltungen:
- WO-A1-2009/089850
- DE-T5-112012 005 111
- US-A1- 2012 044 918
- US-A1- 2014 245 114
- US-A1- 2015 117 177

## Beschreibung

Die Erfindung betrifft einen Verteilerknoten, ein Automatisierungsnetzwerk mit einem Verteilerknoten und ein Verfahren zum Übertragen von Telegrammen in einem Automatisierungsnetzwerk mit Netzwerkesegmenten.

Lokale Kommunikationsnetzwerke, sogenannte "local area networks" LANs, sind auf ein geografisches Gebiet begrenzt und setzen sich aus einem oder mehreren Servern und Arbeitsstationen, sogenannten Knoten, zusammen, die über ein Kommunikationsleitungsnetz, z.B. ein Koaxial-, Glasfaser- oder Twisted-Pair-Kabel miteinander verbunden sind. LANs werden mit einem Netzwerk-Betriebssystem und einem Netzwerk-Protokoll betrieben.

Der zurzeit am weitesten verbreitete Standard für ein LAN-Netzwerk-Protokoll ist das Ethernet, mit dem sich Telegramme, im Weiteren auch als Ethernet-Telegramm bezeichnet, mit Daten bis zu einer Länge von 1500 Bytes mit einer Geschwindigkeit im Gigabit-Bereich übertragen lassen. Das Ethernet-Protokoll wurde zuerst bei Bürokommunikationsnetzwerken eingesetzt. Aufgrund der Vorteile des Ethernet-Konzepts, die sich aus der Nutzung von Standard-Hardware- und -Softwarekomponenten sowie der Möglichkeit, auch bei einfacher Vernetzungstechnologie hohe Datenübertragungsraten zu erreichen, ergeben, hat sich die Ethernet-Netzwerkkommunikation auch in der industriellen Fertigung zum Datenaustausch und zum Durchführen von Steuerungsaufgaben durchgesetzt.

Beim Einsatz von LANs in der industriellen Fertigung muss insbesondere die Echtzeit-Fähigkeit des Netzwerk-Protokolls garantiert sein. Bei der Steuerung von Maschinen ist es erforderlich, dass eine zyklische Bearbeitung der Steuerungsaufgabe ohne zeitliche Schwankungen, d.h. mit nur geringen Abweichungen von der gewünschten Zykluszeit im Bereich weniger Mikrosekunden folgt, wobei mit einer vorhersehbaren Antwortzeit auf die Regelanforderung reagiert wird.

Um in LANs mit vielen Knoten, im Weiteren auch als Teilnehmer bezeichnet, die Durchlaufzeit der Telegramme vom Sende- zum Empfangsknoten zu begrenzen und damit eine Echtzeit-Fähigkeit erreichen zu können, sind in der Automatisierungstechnik eingesetzte LANs oft hierarchisch unter Verwendung von Verteilerknoten, sogenannter Switches, aufgebaut. Der Verteilerknoten weist mehrere Ein-/Ausgabe-Schnittstellen auf, über die mehrere Teilnehmer oder Teilnehmerstränge parallel in das Netzwerk eingebunden sind. Der Verteilerknoten untersucht dabei jedes auf einer Ein-/Ausgabe-Schnittstelle empfangene Telegramm auf die Adresse des angesprochenen Teilnehmers und leitet dann das Telegramm an den adressierten Teilnehmer über die zugeordnete Ein-/Ausgabe-Schnittstelle, an die der Teilnehmer angeschlossen ist, weiter.

Die Verteilerknoten arbeiten in der Regel nach dem FIFO-Prinzip, bei denen diejenigen Telegramme, die zuerst empfangen wurden, auch zuerst wieder gesendet werden. Dies kann aber eine zuverlässige Echtzeitbearbeitung der Telegramme verhindern. Neuere Verteilerknoten unterstützen deshalb oft das sogenannte VLAN-Tagging, mit dem einzelne Telegramme beim Senden priorisiert werden können, um so eine Echtzeitfähigkeit zu gewährleisten.

So ist aus der IEEE Std 802.3br for Ethernet, Amendment 5: Specification and Management Parameters for Interspersing Express Traffic, 2016, ein Priorisierungsverfahren bekannt, das zwischen einer Prioritätsstufe "Express Traffic" und einer Prioritätsstufe "Preemptable Traffic" unterscheidet. Der Verteilerknoten unterbricht den Sendevorgang auf einer Ein-/Ausgabe-Schnittstelle für ein Telegramm, dem die Prioritätsstufe "Preemptable Traffic" zugeordnet ist, für ein Telegramm, dem die Prioritätsstufe "Express Traffic" zugeordnet ist. Der verbleibende Teil des unterbrochenen Telegramms der Prioritätsstufe "Preemptable Traffic", der von dem Verteilerknoten noch nicht gesendet wurde, wird im Verteilerknoten zwischengespeichert und dann später als weiteres Telegramm-Fragment versandt. Für einen solches Priorisierungsverfahren ist es erforderlich, dass alle Teilnehmer im Netzwerk in der Lage sind die fragmentiert übersandten Telegramme der Prioritätsstufe "Preemptable Traffic" wieder zusammenzusetzen.

Ein gattungsgemäßer Verteilerknoten, ein gattungsgemäßes Automatisierungsnetzwerk und ein gattungsgemäßes Datenübertragungsverfahren sind aus der US2015/117177A1 bekannt. Weiterer Stand der Technik ist in der WO 2009/089850 A1, DE 112012 005111 T5, US2012/044918A1 und der US2014/245114A1 offenbart.

Aufgabe ist es, einen Mischbetrieb im Automatisierungsnetzwerk mit Netzwerkesegmenten, die Teilnehmer aufweisen, und Verteilerknoten, die die Netzwerkesegmente verbinden, zu gewährleisten, bei dem eine fragmentierte Übertragung von Telegramme möglich ist, ohne dass alle Teilnehmer das Fragmentierungsverfahren unterstützen müssen.

Diese Aufgabe wird durch einen Verteilerknoten nach Anspruch 1, ein Automatisierungsnetzwerk nach Anspruch 9 und ein Datenübertragungsverfahren nach Anspruch 11 gelöst. Bevorzugte Weiterbildungen sind in den abhängigen Ansprüchen angegeben.

In einem Automatisierungsnetzwerk mit mehreren Netzwerkesegmenten, die jeweils zumindest einen Teilnehmer aufweisen, erfolgt ein Datenaustausch zwischen den Teilnehmern in Form von Telegrammen, wobei die Übertragung der Telegramme gemäß einem Fragmentierungsverfahren in Form von Telegramm-Fragmenten durchgeführt werden kann und wobei sowohl Teilnehmer vorgesehen sein können, die das Fragmentierungsverfahren unterstützen, als auch Standard-Teilnehmer vorgesehen sein können, die das Fragmentierungsverfahren nicht unterstützen. Ein Verteilerknoten im Automatisierungsnetzwerk weist mehrere Ein-/Ausgabe-Schnittstellen und eine mit den Ein-/Ausgabe-Schnittstellen verbundene Vermittlungseinrichtung auf, wobei wenigstens eine Ein-/Ausgabe-Schnittstelle mit einem Netzwerkesegment in Verbindung steht. Die Vermittlungseinrichtung im Verteilerknoten prüft, ob ein Teilnehmer an der Ein-/Ausgabe-Schnittstelle, an den ein Telegramm gesendet werden soll, das Fragmentierungsverfahren unterstützt, und ob das zu sendende Telegramm fragmentiert ist. Wenn der Teilnehmer ein Standard-Teilnehmer ist, der das Fragmentierungsverfahren nicht unterstützt, und das zu sendende Telegramm fragmentiert ist, setzt die Vermittlungseinrichtung im Verteilerknoten die Telegramm-Fragmente zu dem Telegramm zusammen und sendet das zusammengesetzte Telegramm dann an den Standard-Teilnehmer weiter.

Mit der vorstehenden erläuterten Vorgehensweise besteht die Möglichkeit, in einem Automatisierungsnetzwerk auch dann eine Telegramm-Fragmentierung vorzunehmen, wenn nicht alle Teilnehmer am Automatisierungsnetzwerk das Fragmentierungsverfahren unterstützen. Das Automatisierungsnetzwerk kann so auch bei einem nicht einheitlichen Aufbau, bei dem die Teilnehmer unterschiedlich ausgelegt sind, eine schnelle Telegrammübertragung unter Einhaltung von einer Echtzeitanforderung durchführen. Die Automatisierungsnetze lassen sich dabei einfach und flexibel erweitern.

Im Verteilerknoten kann eine Zuordnungstabelle vorgesehen sein, die Kennungen der Standard-Teilnehmer enthält, die das Fragmentierungsverfahren nicht unterstützen, wobei die Vermittlungseinrichtung ausgelegt ist, beim Empfang eines Telegramms eine Kennung des adressierten Teilnehmers zu erfassen und mit den Kennungen der Teilnehmer in der Zuordnungstabelle zu vergleichen. Mit dieser Ausgestaltung kann die Information, dass der Standard-Teilnehmer das Fragmentierungsverfahren nicht unterstützt, auf einfache Weise im Rahmen des Durchleitungsvorgangs im Verteilerknoten verarbeitet werden. Alternativ kann die Zuordnungstabelle auch so ausgestaltet sein, dass der Ein-/Ausgabe-Schnittstelle mit dem Netzwerkesegment die Information zugeordnet wird, ob über die Ein-/Ausgabe-Schnittstelle mit dem Netzwerkesegment fragmentiert gesendet werden darf oder nicht. In diesem Fall ist die Zuordnungstabelle unabhängig von einer Kennung im Telegramm und es ist auch kein zusätzlicher Vergleich erforderlich. Es muss dann auch nicht für jede Telegrammkennung gespeichert werden, ob der adressierte Teilnehmer das Fragmentierungsverfahren unterstützt, sondern nur einmal für die Ein-/Ausgabe-Schnittstelle.

Weiterhin kann im Verteilerknoten die Vermittlungseinrichtung die Zuordnungstabelle beim Hochfahren des Automatisierungsnetzwerkes anlegen. Hierdurch ist eine zuverlässige Zuordnung der Teilnehmerfähigkeiten in Bezug auf eine Telegramm-Fragmentierung möglich.

Dabei kann die Vermittlungseinrichtung im Verteilerknoten selbständig einen Prüfungsvorgang mit den Teilnehmern in an die Ein-/Ausgabe-Schnittstellen angeschlossenen Netzwerkesegmenten ausführen, um die Kennungen der Standard-Teilnehmer zu ermitteln, die das Fragmentierungsverfahren nicht unterstützen.

Ferner kann der Verteilerknoten Telegramme, die für einen Standard-Teilnehmer bestimmt sind, der das Fragmentierungsverfahren nicht unterstützt, vor einem Start des Sendevorgangs an den Teilnehmer immer erst vollständig empfangen.

Die Vermittlungseinrichtung im Verteilerknoten bricht einen Sendevorgang ab, wenn das Telegramm für einen Standard-Teilnehmer bestimmt ist, der das Fragmentierungsverfahren nicht unterstützt, und wenn das Telegramm fragmentiert ist, wobei der Standard-Teilnehmer das bereits gesendete Telegramm-Fragment verwirft.

Die Vermittlungseinrichtung im Verteilerknoten kann ausgelegt sein, wenn ein Telegramm an einen Standard-Teilnehmer in einem mit einer Ein-/Ausgabe-Schnittstellen verbundenen Netzwerkesegment gesendet werden soll, der das Fragmentierungsverfahren nicht unterstützt, das Fragmentierungsverfahren auf das Telegramm nicht anzuwenden.

Die vorstehend erläuterten und/oder in den abhängigen Ansprüchen wiedergegebenen vorteilhaften Aus- und Weiterbildungen können - außer zum Beispiel in Fällen eindeutiger Abhängigkeiten oder unvereinbarer Alternativen - einzeln oder aber auch in beliebiger Kombination miteinander zur Anwendung kommen.

Die oben beschriebenen Eigenschaften, Merkmale und Vorteile, sowie die Art und Weise, wie diese erreicht werden, werden in der Beschreibung anhand von Ausführungsformen auf der Grundlage der Zeichnungen näher erläutert.
Fig. 1 zeigt schematisch einen Aufbau eines Automatisierungskommunikationsnetzwerkes mit mehreren Verteilerknoten und Netzwerkesegmenten.
Fig. 2 zeigt in schematischer Darstellung einen Verteilerknoten aus Fig. 1.
Fig. 3 zeigt in schematischer Darstellung den prinzipiellen Aufbau eines Ethernet-Telegramms mit Prioritätsinformation.
Fig. 4 zeigt in schematischer Darstellung eine im Automatisierungsnetzwerk nach Fig. 1 zwischen Teilnehmer ausgetauschtes Telegramm nach Fig. 3 vor und nach einer Fragmentierung aufgeteilt in zwei Fragmente.

In der Industrieautomation werden Automatisierungsnetzwerke eingesetzt, um verteilt angeordnete Geräte einer Aktor-/Sensorebene mit einer Steuerungsebene zu verbinden. Die Automatisierungsnetzwerke, auch Feldbus-Systeme genannt, weisen in der Regel einen seriellen Bus auf, an den alle Netzwerkteilnehmer angeschlossen sind.

Als Kommunikationsstandard für Netzwerke hat sich dabei der Ethernet-Standard etabliert. Beim Ethernet-Konzept werden die Daten mit einem Kopfabschnitt, im Weiteren auch als Header bezeichnet, und einem Endabschnitt im Weiteren als Trailer bezeichnet, für den Transport von Teilnehmer zu Teilnehmer eingekapselt. Ethernet-Telegramme weisen eine Datenlänge von bis zu 1500 Byte auf und lassen sich mit Geschwindigkeiten bis in den Gigabit-Bereich übertragen. In Feldbus-System werden vorzugsweise echtzeitfähige Ethernet-Protokolle wie beispielsweise EtherCAT eingesetzt. Neben dem Ethernet-Standard können in Feldbus-Systemen jedoch auch andere Protokollarten wie beispielsweise das CANopen-Protokoll verwendet werden.

Die Feldbus-Systeme werden oft als Master-Slave-Bussysteme betrieben. Die Master-Teilnehmer im Feldbus-System sind die Steuerungsknoten, die den Datenverkehr auf dem seriellen Bus regeln. Solche Master-Teilnehmer sind zum Beispiel Industrie-PCs, die als Prozessleitrechner in Fertigungsstraßen dienen. Die Master-Teilnehmer besitzen die Buszugriffsberechtigung und können Daten auf den seriellen Bus ausgeben. Die Slave-Teilnehmer im Feldbus-System werden durch die Maschinenperipheriegeräte, wie zum Beispiel E/A-Geräte, Ventile, Antriebe, Sensoren, Messwertumformer gebildet. Sie besitzen in der Regel keine eigene Buszugriffsberechtigung, das heißt, sie dürfen empfangene Daten nur quittieren und auf Aufforderung Daten über den Bus übermitteln.

In der Industrieautomation erfolgt die Steuerung mithilfe eines Datenaustauschs über die Feldbus-Systeme in der Regel so, dass der Master-Teilnehmer zyklisch Steuerprozesse durchführt, um auf der Grundlage von Eingangsdaten bei Slave-Teilnehmern Ausgangsdaten für diese und/oder andere Slave-Teilnehmer zu erzeugen. Der Master-Teilnehmer verschickt nach dem Abschluss eines Steuerprozess-Zyklus die Ausgangsdaten dann in Form von Telegrammen auf dem Feldbus, wobei die Slave-Teilnehmer die dem jeweiligen Slave-Teilnehmer zugeordneten Ausgangsdaten aus den Telegrammen entnehmen und mit diesen Ausgangsdaten einen lokalen Teilnehmerprozess ausführen. Die vom lokalen Teilnehmerprozess ermittelten Daten werden dann wiederum vom Slave-Teilnehmer an den Master-Teilnehmer zurückgeschickt und anschließend als Eingangsdaten für den nächsten Steuerprozess-Zyklus vom Master-Teilnehmer genutzt.

Um schnelle Regelungsvorgänge mithilfe von Feldbus-Systemen durchführen zu können, muss eine kurze Umlaufzeit der Telegramme garantiert werden, damit eine Echtzeitausführung des Steuerprozesses erreicht wird. In Feldbus-Systemen mit vielen Teilnehmern werden, um die Laufzeit der Telegramme vom Sende- zum Empfangsteilnehmer zu verkürzen, oft Verzweigungen eingesetzt. Das Feldbus-System weist dann in der Datenübertragungsstrecke Verteilerknoten, im Weiteren auch als Switches bezeichnet, auf, an denen jeweils mehrere unabhängige Netzwerkesegmente angeschlossen sind.

Die Verteilerknoten arbeiten in der Regel nach dem FIFO-Prinzip, bei denen diejenigen Telegramme, die zuerst empfangen wurden, auch zuerst wieder gesendet werden. Dieses Sendeprinzip der Verteilerknoten kann aber eine zuverlässige Echtzeitausführung von Steuerprozessen gefährden. Bei Feldbus-Systemen werden neben Telegrammen, die zur Durchführung von Steueraufgaben dienen und deren Datenverkehr zyklisch erfolgt, auch weitere Telegramme in einem azyklischen Datenverkehr ausgetauscht. Der azyklische Datenverkehr wird dabei für Ereignisse im Feldbus-System genutzt, die sich nicht ständig wiederholen. Azyklische Telegramme sind zum Beispiel Telegramme mit Parameter- und Statusdaten. Diese azyklischen Telegramme sind im Gegensatz zu den zyklischen Telegrammen nicht echtzeitrelevant. Das FIFO-Prinzip im Verteilerknoten kann dann dazu führen, dass der Sendevorgang eines azyklischen Telegramms das Weiterleiten eines später empfangenen zyklischen Telegramms blockiert und damit die Bearbeitung des zyklischen Telegramms, das für die Durchführung einer Steueraufgabe notwendig ist, verzögert. Verteilerknoten unterstützen deshalb oft das sogenannte VLAN-Tagging, mit dem einzelne Telegramme beim Senden priorisiert werden können, um so eine Echtzeitfähigkeit zu gewährleisten. Den im Automatisierungsnetzwerk zu übertragenen Telegrammen werden dazu Prioritäten zugeordnet. So können dann zyklische Echtzeit-Telegramme, die für die Steuerung des Automatisierungsnetzwerkes relevant sind und zyklische Ein-/Ausgabedaten der Teilnehmer enthalten, einen ersten höheren Prioritätswert besitzen. Die beschriebenen azyklische Nicht-Echtzeit-Telegramme, die Parameter- oder Statusdaten der Teilnehmer enthalten, sind dann mit einem zweiten niedrigen Prioritätswert versehen.

Die Verteilerknoten sind dann so ausgelegt, dass der Verteilerknoten das Senden eines Telegramms mit dem zweiten, niedrigen Prioritätswert auf einer Ein-/Ausgabe-Schnittstelle unterbricht, wenn der Verteilerknoten ein Telegramm mit dem ersten, höheren Prioritätswert empfängt. Der Verteilerknoten schließt dabei das bereits versandte Telegramm-Fragment definiert ab, indem der Verteilerknoten eine Fragmentier-Information, die anzeigt, dass es sich um ein Telegramm-Fragment handelt, am Ende des Telegramm-Fragments versendet. Der verbleibende Telegrammteil wird weiterhin vom Verteilerknoten zwischenspeichert. Nach dem Versand des Telegramms mit dem ersten, höheren Prioritätswert auf der Ein-/Ausgabe-Schnittstelle versendet der Verteilerknoten dann den zwischengespeicherten Telegrammteil mit dem zweiten, niedrigen Prioritätswert zusammen mit einer weiteren Fragmentier-Information auf der Ein-/Ausgabe-Schnittstelle. Der Teilnehmer, für den das Telegramm mit dem zweiten, niedrigen Prioritätswert bestimmt ist, setzt dann das erste und zweite Telegramm-Fragment nach dem Empfang auf der Grundlage der mitgeschickten Fragmentier-Informationen wieder zusammen.

Damit der Teilnehmer die Telegramm-Fragmente wieder zusammensetzen kann, muss gewährleistet sein, dass der Teilnehmer das auf die Telegramme angewandte Fragmentierungsverfahren unterstützt. Um den Einsatz eines Fragmentierungsverfahrens in einem Automatisierungsnetzwerk zu ermöglichen, bei dem auch Teilnehmer im Netzwerk vorgesehen sein können, die das eingesetzte Fragmentierungsverfahren nicht unterstützen, sind die Verteilerknoten im Automatisierungsnetzwerk ausgelegt, das Fragmentierungsverfahren abhängig davon zu steuern, ob in einem Teilnehmer, der in einem an eine Ein-/Ausgabe-Schnittstelle des Verteilerknotens angeschlossenen Netzwerkesegment angeordnet ist, das im Automatisierungsnetzwerk verwendete Fragmentierungsverfahren implementiert ist.

Wenn der Verteilerknoten feststellt, dass der in einem Telegramm adressierte Teilnehmer das Fragmentierungsverfahren nicht unterstützt, und das an diesen Teilnehmer weiterzuleitende Telegramm fragmentiert ist, setzt der Verteilerknoten die Telegramm-Fragmente des fragmentierten Telegramms wieder zusammen und leitet statt der Telegramm-Fragmente das zusammengesetzte Telegramm dann an den adressierten Teilnehmer weiter. Mit dieser Vorgehensweise wird gewährleistet, dass der Teilnehmer im Automatisierungsnetzwerk, der das implementierte Fragmentierungsverfahren nicht unterstützt, kein fragmentiertes, sondern immer ein vollständiges Telegramm zur Verarbeitung erhält. Im Automatisierungsnetzwerk ist damit ein Mischbetrieb mit Teilnehmern, die das Fragmentierungsverfahren unterstützen, und Teilnehmern, die das Fragmentierungsverfahren nicht unterstützen, möglich.

Im Verteilerknoten kann eine Zuordnungstabelle vorgesehen sein, die Kennungen der Standard-Teilnehmer enthält, die das Fragmentierungsverfahren nicht unterstützen, wobei die Vermittlungseinrichtung ausgelegt ist, beim Empfang eines Telegramms eine Kennung des adressierten Teilnehmers zu erfassen und mit den Kennungen der Teilnehmer in der Zuordnungstabelle zu vergleichen. Mit dieser Ausgestaltung kann die Information, dass der Standard-Teilnehmer das Fragmentierungsverfahren nicht unterstützt, auf einfache Weise im Rahmen des Durchleitungsvorgangs im Verteilerknoten verarbeitet werden.

Alternativ kann die Zuordnungstabelle auch so ausgestaltet sein, dass der Ein-/Ausgabe-Schnittstelle mit dem Netzwerkesegment die Information zugeordnet wird, ob über die Ein-/Ausgabe-Schnittstelle mit dem Netzwerkesegment fragmentiert gesendet werden darf oder nicht. In diesem Fall ist die Zuordnungstabelle unabhängig von einer Kennung im Telegramm und es ist auch kein zusätzlicher Vergleich erforderlich. Es muss dann auch nicht für jede Telegrammkennung gespeichert werden, ob der adressierte Teilnehmer das Fragmentierungsverfahren unterstützt, sondern nur einmal für die Ein-/Ausgabe-Schnittstelle.

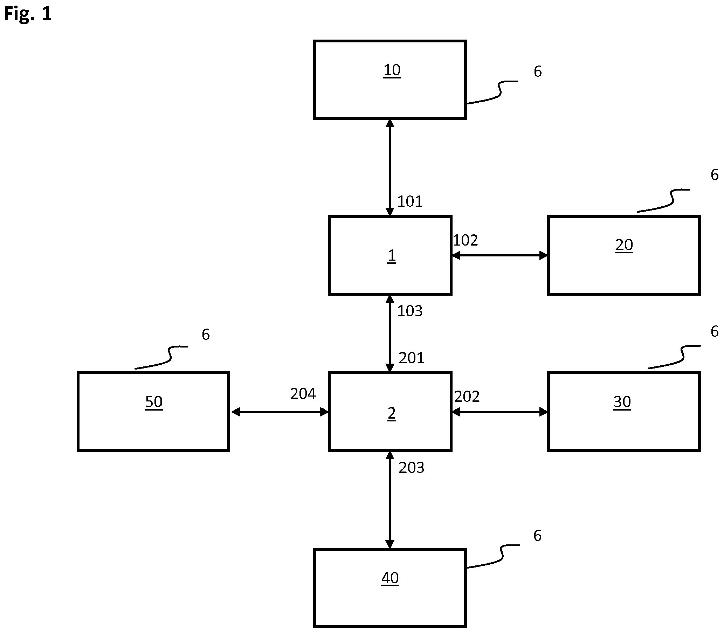

Figur 1 zeigt ein Feldbus-System in schematischer Darstellung, bei dem sowohl Teilnehmer 6 vorgesehen sind, die das Fragmentierungsverfahren unterstützen, im Weiteren auch als Fragmentier-Teilnehmer 10, 20, 30, 40 bezeichnet, als auch Teilnehmer 6, die das Fragmentierungsverfahren nicht unterstützen, im Weiteren auch als Standard-Teilnehmer 50 bezeichnet. Die in Figur 1 gezeigte Topologie des Automatisierungsnetzwerkes umfasst zwei Verteilerknoten 1, 2, an denen insgesamt fünf Teilnehmer 6 und zwar vier Fragmentier-Teilnehmer 10, 20, 30, 40 und ein Standard-Teilnehmer 50 angeschlossen sind.

Der erste Verteilerknoten 1 weist drei weitere Ein-/Ausgabe-Schnittstellen 101, 102, 103 auf, wobei an die weitere erste Ein-/Ausgabe-Schnittstelle 101 der erste Fragmentier-Teilnehmer 10, an die weitere zweite Ein-/Ausgabe-Schnittstelle 102 der zweite Fragmentier-Teilnehmer 20 und an die weitere dritte Ein-/Ausgabe-Schnittstelle 103 der Verteilerknoten 2 angeschlossen sind. Der zweite Verteilerknoten 2 besitzt vier Ein-/Ausgabe-Schnittstellen 201, 202, 203, 204, von denen die erste Ein-/Ausgabe-Schnittstelle 201 mit der weiteren dritten Ein-/Ausgabe-Schnittstelle 103 des ersten Verteilerknotens 1 verbunden ist. An die zweite Ein-/Ausgabe-Schnittstelle 202 des zweiten Verteilerknotens 2 ist der dritte Fragmentier-Teilnehmer 30 und an die dritte Ein-/Ausgabe-Schnittstelle 203 des zweiten Verteilerknotens 2 ist der vierte Fragmentier-Teilnehmer 40 angeschlossen. Die vierte Ein-/Ausgabe-Schnittstelle 204 des zweiten Verteilerknotens 2 ist mit dem Standard-Teilnehmer 50 verbunden.

Die in Fig. 1 gezeigte Auslegung des Automatisierungsnetzes ist nur beispielhaft. Grundsätzlich besteht die Möglichkeit, eine beliebige Anzahl von Switches miteinander zu verknüpfen. Auch kann jeder Switch eine beliebige Anzahl von Ein-/Ausgabe-Schnittstellen aufweisen. In jedem Netzwerkesegment, das an eine Ein-/Ausgabe-Schnittstelle eines Switches angeschlossen ist, können darüber hinaus im Rahmen eines Netzwerkesegments eine beliebige Anzahl von Teilnehmern 6 angeordnet sein, die sowohl Fragmentier-Teilnehmer 10, 20, 30, 40 als auch Standard-Teilnehmer 50 sein können. Es können dabei in jedem Netzwerkesegment insbesondere auch Fragmentier-Teilnehmer 10, 20, 30, 40 und Standard-Teilnehmer 50 gemischt angeschlossen werden.

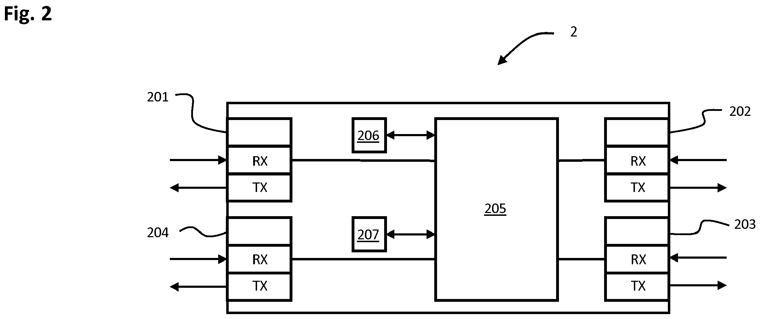

Fig. 2 zeigt in schematischer Darstellung beispielhaft für die im Automatisierungsnetzwerk eingesetzten Verteilerknoten den Aufbau des zweiten Verteilerknotens 2. Der erste Verteilerknoten 1 in Fig.1 ist analog aufgebaut. Die vier ersten bis vierten Ein-/Ausgabe-Schnittstellen 201, 202, 203, 204 sind mit einer Vermittlungseinrichtung 205 verbunden, die den Betrieb des zweiten Verteilerknotens 2 steuert. Jede der vier ersten bis vierten Ein-/Ausgabe-Schnittstelle 201, 202, 203, 204 weist dabei eine Empfangseinheit RX und eine Sendeeinheit TX auf, wobei durch Pfeile in Fig. 2 die jeweilige Datenübertragungsrichtung angezeigt wird.

Zur Steuerung des Telegrammverkehrs durch den zweiten Verteilerknoten 2 ist die Vermittlungseinrichtung 205 mit einer Zuordnungstabelle 206, im Weiteren auch als Routingliste bezeichnet, und einer Speichereinheit 207 verbunden. Die Zuordnungstabelle 206 enthält für jedes im Automatisierungsnetzwerk verwendete Telegramm 3 wenigstens eine Telegramm-Kennung und die Sendeeinheit TX einer zugeordnete ersten bis vierten Ein-/Ausgabe-Schnittstelle 201, 202, 203, 204. Ferner kann die Zuordnungstabelle 206 abhängig vom eingesetzten Netzwerk-Protokoll noch weitere Informationen zu den einzelnen Telegrammen 3, wie zum Beispiel den Sendezeitpunkt, die Empfangseinheit RX einer ersten bis vierten Ein-/Ausgabe-Schnittstelle 201, 202, 203, 204 und den Empfangszeitpunkt umfassen.

Beim Empfang eines Telegramms 3 über die Empfangseinheit RX einer ersten bis vierten Ein-/Ausgabe-Schnittstelle 201, 202, 203, 204 erfasst die Vermittlungseinrichtung 205 im zweiten Verteilerknoten 2 die Telegramm-Kennung im empfangenen Telegramm 3 und vergleicht die erfasste Telegramm-Kennung mit den Einträgen in der Zuordnungstabelle 206. Die Vermittlungseinrichtung 205 gibt dann das Telegramm 3 entsprechend der Vorgabe in der Zuordnungstabelle 206 über die für die Telegramm-Kennung in der Zuordnungstabelle 206 vermerkte Sendeeinheit TX der zugeordneten ersten bis vierten Ein-/Ausgabe-Schnittstelle 201, 202, 203, 204 aus.

Der Telegrammverkehr bei dem in Fig. 1 gezeigten Automatisierungsnetzwerk wird nachfolgend beispielhaft anhand von Telegrammen 3, welche im Allgemeinen auch Ethernet-Telegramme bezeichnet werden können, erläutert. Es besteht jedoch die Möglichkeit, beliebige andere Netzwerk-Protokolle einzusetzen.

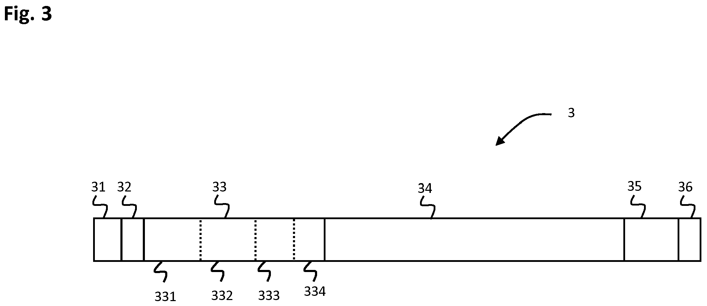

Fig. 3 zeigt schematisch den Aufbau eines als Ethernet-Telegramm ausgebildeten Telegramms 3 mit einer VLAN-Tag-Erweiterung, mit der das Telegramm 3 beim Senden priorisiert werden kann. Das Telegramm 3 weist einen Datenbereich 34 mit einer Länge von bis zu 1500 Byte auf, der von einem Kopfabschnitt, welcher im Allgemeinen auch als Header 33 bezeichnet werden kann, und einem Endabschnitt, dem sogenannten Trailer 35, eingekapselt ist. Dem Header 33 ist eine 7 Byte lange Präambel 31, die zur Synchronisation dient, und eine 1 Byte lange Startkennung 32 für das eigentliche Telegramm 3, ein sogenannter Start of Frame Delimiter, SOF vorgeschaltet. Der Header 33 umfasst 18 Byte und setzt sich aus einem 6 Byte langen Zieladress-Feld 331, einem 6 Byte langen Absenderadress-Feld 332, einem 4 Byte langen VLAN-Tag-Feld 333 und einem 2 Byte langen Typ-Feld 334 zusammen. Im VLAN-Tag-Feld 333 ist der Prioritätswert des Telegramms 3 kodiert. Das Typ-Feld 334 zeigt den Telegrammtyp, also das Protokoll der nächst höheren Verarbeitungsschicht an. Der Trailer 35 am Ende des Telegramms 3 ist 4 Bytes lang. Im Trailer 35 befindet sich eine Prüfsumme. Die Berechnung der Prüfsumme, die der sendende Teilnehmer 6 ausführt, beginnt mit dem Zieladress-Feld 331 und endet mit dem Datenbereich 34. Die Präambel 31, die Startkennung 32 sowie der Trailer 35 selbst sind in der Prüfsumme nicht enthalten. Anhand der Prüfsumme kann der als Empfänger fungierende Teilnehmer 6, der die Berechnung wiederholt, durch Vergleich der beiden Werte dann feststellen, ob die Übertragung fehlerhaft war. An das Ende des Telegramms 3 wird noch ein Steuersymbol 36, ein sogenanntes End of Frame EOF angefügt, das den Abschluss des Telegramms 3 anzeigt.

Alternativ zum VLAN-Tag-Feld 333, das den Prioritätswert des Telegramms 3 enthält, kann der Prioritätswert jedoch auch an einer anderen Stelle im Header 33 angezeigt sein und beispielsweise im Zieladress-Feld 331 beziehungsweise im Absenderadress-Feld 332 mit kodiert werden.

Nachfolgend wird ein Telegrammverkehr im in Fig. 1 gezeigten Automatisierungsnetzwerk erläutert, bei dem das in Fig. 3 gezeigte, mit Prioritäten versehenen Telegramm 3 eingesetzt wird, auf das ein Fragmentierungsverfahren angewendet werden kann. Es werden folgende zwei Szenarios gegenübergestellt. Der erste Fragmentier-Teilnehmer 10 sendet zu einem ersten Zeitpunkt ein erstes Telegramm 3 mit dem Prioritätswert 1. Ein zweites Telegramm 3 mit dem Prioritätswert 2 wird zu einem Zeitpunkt vom zweiten Fragmentier-Teilnehmer 20 versandt. Es wird davon ausgegangen, dass der zweite Zeitpunkt nach dem ersten Zeitpunkt liegt und der Prioritätswert 2 eine höhere Priorität als der Prioritätswert 1 anzeigt. Im ersten Szenario sind die beiden Telegramme 3 für den vierten Fragmentier-Teilnehmer 40 bestimmt, der das Fragmentierungsverfahren unterstützt. Im zweiten Szenario sind die beiden Telegramme 3 dagegen an den Standard-Teilnehmer 50, der das Fragmentierungsverfahren nicht unterstützt, adressiert.

Der erste Verteilerknoten 1 empfängt zum ersten Zeitpunkt das erste Telegramm 3 mit dem Prioritätswert 1 auf der weiteren ersten Ein-/Ausgabe-Schnittstelle 101. Anhand der Telegramm-Kennung, im ersten Telegramm 3 der Zieladresse, sucht der erste Verteilerknoten 1 nach dem entsprechenden Eintrag in seiner Zuordnungstabelle und verarbeitet das Telegramm 3 dann entsprechend. Die Zuordnungstabelle zeigt im ersten Verteilerknoten 1 dann sowohl beim ersten Szenario, bei dem der vierte Fragmentier-Teilnehmer 40 adressiert ist, als auch beim zweiten Szenario, bei dem der Standard-Teilnehmer 50 adressiert ist, an, dass das erste Telegramm 3 auf der weiteren dritten Ein-/Ausgabe-Schnittstelle 103 weitergeleitet werden soll, an die der Verteilerknoten 2 angeschlossen ist.

Der erste Verteilerknoten 1 beginnt dann auf der weiteren dritten Ein-/Ausgabe-Schnittstelle 103 mit dem entsprechenden Sendevorgang des ersten Telegramms 3. Zum Zeitpunkt T2 empfängt der erste Verteilerknoten 1 dann das zweite Ethernet-Telegramm 3 auf der weiteren zweiten Ein-/Ausgabe-Schnittstelle 102 und wertet wiederum das Zieladress-Feld aus. Wie im Falle des ersten Telegramms 3 zeigt die Zuordnungstabelle dem zweiten Verteilerknoten 1 an, dass das zweite Telegramm 3 auf der weiteren dritten Ein-/Ausgabe-Schnittstelle 103 an den Verteilerknoten 2 weitergeleitet werden soll.

Die weitere dritte Ein-/Ausgabe-Schnittstelle 103 des ersten Verteilerknotens 1 ist jedoch zum zweiten Zeitpunkt bereits durch den Sendevorgang des ersten Telegramms 3 blockiert. Aufgrund der höheren Priorität des zweiten Telegramms 3 gegenüber dem ersten Telegramm 3, die der ersten Verteilerknoten 1 bei der Auswertung der beiden VLAN-Tag-Felder im ersten und zweiten Telegramm 3 ermittelt, bricht der erste Verteilerknoten 1 den Sendevorgang des ersten Ethernet-Telegramms 3 ab.

Beim Abbruchvorgang setzt der erste Verteilerknoten 1 dabei das im Automatisierungsnetzwerk implementierte Fragmentierungsverfahren ein. Der erste Verteilerknoten 1 sendet am Ende des abgebrochenen ersten Telegramms 3 eine Fragmentier-Information, die eine Fragmentier-Kennung und eine Prüfsumme umfasst, und ein erstes Steuersymbol 36, das das Ende eines Fragments anzeigt. Die Fragmentier-Kennung kann beispielsweise eine Fragment-Nummer sein, die den bereits gesendeten Teil des ersten Telegramms 3 als erstes Telegramm-Fragment 301 kennzeichnet. Die Prüfsumme wird vom erste Verteilerknoten 10 aus dem bereits gesendeten Telegramm-Fragment berechnet.

Weiterhin speichert der erste Verteilerknoten 10 den verbleibenden Teil des ersten Telegramms 3 in seiner Speichereinheit 207 ab. Das abgespeicherte zweite Fragment des ersten Telegramms 3 wird dabei zusätzlich mit einem Header 33 versehen, der wiederum eine Fragment-Kennung, die auf das erste Fragment des ersten Telegramms 3 verweist und beispielsweise die Fragment-Nummer des ersten Fragments sein kann. Dem Header 33 wird zusätzlich ein zweites Steuersymbol 321 vorangestellt, das den Beginn eines Fragments anzeigt.

Der erste Verteilerknoten 1 nimmt nach dem Abbrechen des ersten Telegramms 3 dann das Senden des zweiten Telegramms 3 mit dem höheren Prioritätswert 2 über die weitere dritte Ein-/Ausgabe-Schnittstelle 103 auf. Nachdem das zweite Telegramm 3 dann weitergeleitet ist, versendet der erste Verteilerknoten 1 das gespeicherte zweite Fragment des ersten Telegramms 3 mit dem niedrigen Prioritätswert 1, wobei das zweite Steuersymbol 321 und der Header 33 mit der Fragment-Kennung mitversandt werden. Zusätzlich wird am Ende des zweiten Telegramm-Fragments dann im Trailer 35 wiederum eine Prüfsumme, die der erste Verteilerknoten 1 über die Daten des zweiten Fragments berechnet, angefügt und am Ende das End of Frame-Steuersymbol 36 für das erste Telegramm 3 übermittelt.

Grundsätzlich besteht wiederum die Möglichkeit, dass auch das Senden dieses zweiten Fragments unterbrochen und das zweiten Fragment nochmals fragmentiert wird, dann, wenn beim Versand des zweiten Fragments ein weiteres Telegramm 3 mit einem höheren Priorität beispielweise dem Prioritätswert 2 vom ersten Verteilerknoten 1 auf einer weiteren ersten bis dritten Ein-/Ausgabe-Schnittstelle 101, 102, 103 empfangen wird und über die weitere dritte Ein-/Ausgabe-Schnittstelle 103 weitergeleitet werden soll. Bei einer solchen weiteren Fragmentierung wird dann analog zur ersten Fragmentierung vorgegangen.

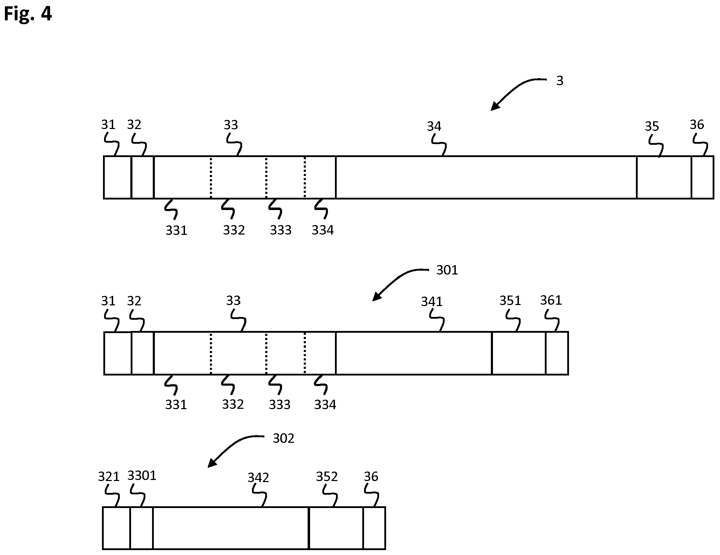

Fig. 4 zeigt das erste Ethernet-Telegramm 3 in seiner ursprünglichen Form und nach der Fragmentierung in das erste Telegramm-Fragment 301 und das zweite Telegramm-Fragment 302. Gegenüber dem ursprünglichen Telegramm 3, das entsprechend dem in Fig. 3 gezeigten Telegramm 3 aufgebaut ist, weist das erste Telegramm-Fragment 301 bei einem verkürzten Nutzdatenbereich 341 den veränderten Trailer 351, der die Fragmentier-Information und die Fragment-Prüfsumme enthält, und das erste Fragment-Steuersymbol 361 auf. Das zweite Telegramm-Fragment 302 beginnt mit dem zweiten Fragment-Steuersymbol 321 und dem veränderten Header 3301, der die Fragment-Kennung enthält. Daran schließt sich dann der restliche Nutzdatenbereich 342, der zusätzliche Trailer 352 mit der Fragment-Prüfsumme und das End of Frame-Steuersymbol 36, das das Telegrammende anzeigt, an.

Statt dem erläuterten Fragmentierungsverfahren besteht auch die Möglichkeit, mit Prioritäten versehene Telegramme 3 mit anderen Fragmentierungsverfahren zu bearbeiten. Grundsätzlich ist dabei erforderlich, dass beim Fragmentieren den einzelnen Telegramm-Fragmenten 301, 302 Fragmentier-Informationen zugeordnet werden, die es ermöglichen, die Telegramm-Fragmenten 301, 302 dann wieder zu einem vollständigen Telegramm 3 zusammenzufügen. Dabei muss das erste Telegramm-Fragment 301 durch eine Fragmentier-Information eindeutig gekennzeichnet sein. Das zweiten Telegramm-Fragment 302 und die folgenden Telegramm-Fragmente müssen dann jeweils Fragmentier-Informationen enthalten, die eine Zuordnung zum ersten Telegramm-Fragment beziehungsweise dem vorgehenden Telegram-Fragment ermöglicht. Dies kann, wie vorstehend erläutert, durch eine fortlaufende Fragment-Nummer erfolgen, mit der ein vorausgehendes Telegramm-Fragment auf ein nachfolgendes Telegramm-Fragment verweist.

Damit der adressierte Teilnehmer die Telegramm-Fragmente 301, 302 wieder zum Telegramm 3 zusammensetzen kann, ist es erforderlich, dass der adressierte Teilnehmer das Fragmentierungsverfahren unterstützt. Beim ersten Szenario, bei dem der vierte Fragmentier-Teilnehmer 40 im ersten durch den ersten Verteilerknoten 1 fragmentierten Telegramm 3 adressiert ist, hat der vierte Fragmentier-Teilnehmer 40 diese Funktionalität und kann die beiden Telegramm-Fragmente 301, 302 verarbeiten. Der zweite Verteilerknoten 2 leitet deshalb nach dem Empfang der Telegramm-Fragmente 301, 302 über die erste Ein-/Ausgabe-Schnittstelle 201 nach Auswertung der Telegramm-Kennung auf der Grundlage der Zuordnungstabelle 206, die dem zweiten Verteilerknoten 2 anzeigt, dass der adressierte vierte Fragmentier-Teilnehmer 40 an die dritte Ein-/Ausgabe-Schnittstelle 203 angeschlossen ist, auf dieser dritten Ein-/Ausgabe-Schnittstelle 203 die Telegramm-Fragmente 301, 302 dann weiter. Der vierte Fragmentier-Teilnehmer 40 setzt nach Erhalt der beiden Telegramm-Fragmente 301, 302 mit Hilfe der in den Telegramm-Fragmenten 301, 302 enthaltenen Fragmentier-Information die beiden Telegramm-Fragmente 301, 302 zum ersten Telegramm 3 zusammen.

Beim zweiten Szenario, dann, wenn das erste Telegramm 3 an den Standard-Teilnehmer 50 adressiert ist, der das Fragmentierungsverfahren nicht unterstützt, setzt die Vermittlereinrichtung 205 im zweiten Verteilerknoten 2 dagegen die beiden Telegramm-Fragmente 301, 302 erst zusammen und sendet dann das zusammengesetzte erste Telegramm 3 an den Standard-Teilnehmer 50 weiter, der das erste Telegramm 3 nun verarbeiten kann.

Der zweite Verteilerknoten 2 geht dabei so vor, dass die Vermittlungseinrichtung 205 beim Auswerten der Telegramm-Kennung zur Ermittlung der zugeordneten Sendeinformationen in der Zuordnungstabelle 206, also insbesondere der zugeordneten zweiten bis vierten Ein-/Ausgabe-Schnittstelle 202, 203, 204, über die das Telegramm 3 weitergeleitet werden soll, zusätzlich überprüft, ob der adressierte Teilnehmer 6, wenn der adressierte Teilnehmer 6 über ein Netzwerkesegment direkt an die entsprechende zweite bis vierte Ein-/Ausgabe-Schnittstelle 202, 203, 204 angeschlossen ist, das im Automatisierungsnetzwerk eingesetzte Fragmentierungsverfahren unterstützt. Die Zuordnungstabelle 206 enthält dazu neben den Sendeinformationen weiterhin eine entsprechende Teilnehmer-Kennung, die anzeigt, ob der adressierte Teilnehmer 6 das Fragmentierungsverfahren unterstützt oder nicht. Die Teilnehmer-Kennung kann beispielsweise mit einem Booleschen Wert angezeigt werden.

Alternativ kann die Zuordnungstabelle 206 auch so ausgestaltet sein, dass der vierten Ein-/Ausgabe-Schnittstelle 204, an der der Standard-Teilnehmer 50, der das Fragmentierungsverfahren nicht unterstützt, angeschlossen ist, die Information zugeordnet ist, das über die vierte Ein-/Ausgabe-Schnittstelle 204 nicht fragmentiert gesendet werden darf. Der ersten bis dritten Ein-/Ausgabe-Schnittstelle 201, 202, 203, an die nicht direkt Standard-Teilnehmer angeschlossen sind, ist dagegen die Information zugeordnet ist, das über die Ein-/Ausgabe-Schnittstelle jeweils fragmentiert gesendet werden darf.

Wenn der zweite Verteilerknoten 2 feststellt, dass der adressierte Teilnehmer 6 wie im zweiten Szenario ein Standard-Teilnehmer 50 ist, der das Fragmentierungsverfahren nicht unterstützt, besteht die Möglichkeit, dass der zweite Verteilerknoten 2 vor einem Start eines Sendevorgangs eines an den Standard-Teilnehmer 50 adressierten Telegramms 3, das Telegramm 3 immer erst vollständig empfängt. Die Vermittlungseinrichtung 205 im zweiten Verteilerknoten 2 wertet dann nach dem vollständigen Empfang das Telegramm 3 aus, um festzustellen, ob es sich um ein Telegramm-Fragment 301, 302 handelt, also, ob eine Fragmentier-Information enthalten ist, die die empfangenen Telegrammdaten als erstes Telegramm-Fragment 301 eines Telegramms 3 kennzeichnen.

Beim zweiten Szenario erkennt die Vermittlungseinrichtung 205 des zweiten Verteilerknotens 2 im ersten Telegramm-Fragment 301 des ersten Telegramms 3 das erste Fragmentier-Steuersymbol und die in der vorausgehenden Fragmentier-Information enthaltene Fragment-Nummer, die anzeigt, dass es sich um ein erstes Telegramm-Fragment 301 handelt. Der zweite Verteilerknoten 2 legt dann das empfangene erste Telegramm-Fragment 301und die weiteren nachfolgend empfangenen zweiten und weiteren Telegramm-Fragmente 302 in der Speichereinheit 207 ab, bis die Vermittlungseinrichtung 205 im zweiten Verteilerknoten 2 anhand der Fragmentier-Information und der dem End of Frame-Steuersymbol 36 in einem nachfolgenden Telegramm-Fragment, im zweiten Szenario im zweiten Telegramm-Fragment 302 des ersten Telegramms 3 erkennt, dass keine weiteren Telegramm-Fragmente mehr übersandt werden und damit das Telegramm 3 vollständig empfangen wurde.

Die Vermittlungseinrichtung 205 im Verteilerknoten 2 setzt dann die in der Speichereinheit 207 abgelegten Telegramm-Fragmente 301, 302 auf der Grundlage der Fragmentier-Informationen in den Telegramm-Fragmenten 301, 302 wieder zu dem Gesamttelegramm zusammen. Im zweiten Szenario fügt die Vermittlungseinrichtung 205 im zweiten Verteilerknoten 2 so die beiden Telegramm-Fragmente 301, 302 auf der Grundlage der Fragmentier-Nummern wieder zu dem ersten Telegramm 3 zusammen.

Ferner überprüft die Vermittlungseinrichtung 205 im zweiten Verteilerknoten 2 zusätzlich anhand der in den einzelnen Telegramm-Fragmenten 301, 302 mit übertragenen Prüfsumme, ob das jeweilige Telegramm-Fragment 301, 302 korrekt übertragen wurde. Es kann auch vorgesehen sein, dass die Vermittlungseinrichtung 205 im zweiten ersten Verteilerknoten 2 nach dem Zusammensetzen des Telegramms 3 anhand der ursprünglichen Prüfsumme des Telegramms 3, die im Trailer 35 des letzten Telegramm-Fragments 302 mit übertragen werden kann, das Telegramm 3 auf seine Vollständigkeit hin überprüft. Es besteht jedoch auch die Möglichkeit, dass die Verifizierung des Telegramms 3 erst durch den adressierten Teilnehmer 6, im zweiten Szenario vom Standard-Teilnehmer 50, an den das vollständige Telegramm 3 dann vom Verteilerknoten weitergeleitet wird, erfolgt.

Der Sendevorgang des im zweiten Verteilerknoten 2 zusammengesetzten ersten Telegramms 3 an den Standard-Teilnehmer 50 erfolgt über die vierte Ein-/Ausgabe-Schnittstelle 204, wenn die vierte Ein-/Ausgabe-Schnittstelle 204 frei ist. Der Verteilerknoten 2 kann jedoch auch in Bezug auf das zusammengesetzte erste Telegramm 3 wiederum eine Priorisierung vornehmen. Falls das zusammengesetzte Telegramm 3 eine höhere Priorität als das augenblicklich auf der vierten Ein-/Ausgabe-Schnittstelle 204 gesendete Telegramm 3 hat, kann dieses Telegramm 3 unterbrochen werden, um dann erst das zusammengesetzte erste Telegramm 3 zu senden. Umgekehrt besteht auch die Möglichkeit, den Sendevorgang des zusammengesetzten ersten Telegramms 3 zu unterbrechen, wenn ein Telegramm 3 mit einer höheren Priorität empfangen wird, das auf derselben vierten Ein-/Ausgabe-Schnittstelle 204 weitergeleitet werden soll.

Grundsätzlich ist der zweite Verteilerknoten 2 jedoch so ausgelegt, dass der zweite Verteilerknoten 2, wenn die Teilnehmer-Kennung wie beim zusammengesetzten ersten Telegramm 3 angezeigt ist, dass der adressierte Standard-Teilnehmer 50 das Fragmentierungsverfahren nicht unterstützt, der Verteilerknoten 2 keine Fragmentierung von Telegrammen 3, die an diesen Standard-Teilnehmer 50 gesendet werden sollen, vornimmt.

Wenn vom dritten Fragmentier-Teilnehmer 30 beispielsweise ein weiteres Telegramm 3 mit dem Prioritätswert zwei während des Sendevorgangs des zusammengesetzten ersten Telegramms 3 mit dem Prioritätswert eins über die zweite Ein-/Ausgabe-Schnittstelle 202 vom zweiten Verteilerknoten 2 empfangen wird, das an den Standard-Teilnehmer 50 adressiert ist, bricht die Vermittlungseinrichtung 205 des zweiten Verteilerknotens 2 den Sendevorgang des zusammengesetzten ersten Telegramms 3 ab und übermittelt stattdessen das vom dritten Fragmentier-Teilnehmer 30 empfangene weitere Telegramm 3 an den Standard-Teilnehmer 50. Nach Ende des Sendevorgangs des weiteren Telegramms 3 wird dann der Sendevorgang des zusammengesetzten ersten Telegramms 3 nochmals neu gestartet. Alternativ besteht auch die Möglichkeit, dass der zweite Verteilerknoten 2 so ausgelegt ist, dass der zweite Verteilerknoten 2 dann, wenn das Telegramm 3 an einen Teilnehmer 6, wie den Standard-Teilnehmer 50, adressiert ist, der das Fragmentierungsverfahren nicht unterstützt, ein Sendevorgang prinzipiell nicht unterbricht und das Telegramm 3 immer erst vollständig übermittelt, unbesehen davon, ob das weitere empfangene Telegramm 3 einen höheren Prioritätswert besitzt.

Alternativ zur Vorgehensweise der Vermittlungseinrichtung 205 im zweiten Verteilerknoten 2 immer erst die an einen Standard-Teilnehmer 50 adressierten Telegramme 3 vollständig zu empfangen, bevor die Telegramme 3 weiterversandt werden, kann die Vermittlungseinrichtung 205 des zweiten Verteilerknotens 2 auch so ausgelegt sein, dass auch dann, wenn der adressierte Teilnehmer 6 das Fragmentierungsverfahren nicht unterstützt, Telegramme 3 grundsätzlich entsprechend der in der Zuordnungstabelle 206 eingespeicherten Sendevorschriften auch vor dem kompletten Telegramm-Empfang schon weitergeleitet werden. Wenn dann die Vermittlungseinrichtung 205 des zweiten Verteilerknotens 2 parallel zum Sendvorgang beim Auswerten des Telegramms 3 feststellt, dass es sich um ein fragmentiertes Telegramm 3 handelt, bricht die Vermittlereinrichtung 205 des zweiten Verteilerknotens 2 den Sendevorgang ab und legt das gesamte empfangene Telegramm-Fragment in der Speichereinheit 207 ab, um dann auf den Empfang der weiteren Telegramm-Fragmente zu warten. Der adressierte Standard-Teilnehmer 50 verwirft dann die bereits übersandten Daten, da keine oder eine falsche Prüfsumme vorliegt.

Im Automatisierungsnetzwerk kann grundsätzlich vorgesehen sein, dass alle Verteilerknoten 1, 2 entsprechend dem vorstehend erläuterten zweiten Verteilerknoten 2 ausgelegt sind, also die Vermittlungseinrichtung 205 im Verteilerknoten 1, 2 immer prüft, ob ein Teilnehmer 6 in einem Netzwerkesegment, an den ein Telegramm 3 gesendet werden soll, das im Automatisierungsnetzwerk vorwendete Fragmentierungsverfahren unterstützt, und dann ein an einen Standard-Teilnehmer, der das Fragmentierungsverfahren nicht unterstützt, zu sendendes Ethernet-Telegramm 3, das fragmentiert ist, zusammensetzt. Es besteht jedoch auch die Möglichkeit, im Automatisierungsnetzwerk im Rahmen des Fragmentierungsverfahrens Verteilerknoten 1, 2 einzusetzen, die diese Vorgehensweise nicht unterstützen. In diesem Fall muss das Automatisierungsnetzwerk so ausgelegt werden, dass an diese Verteilerknoten 1, 2 nur Fragmentier-Teilnehmer 10, 20, 30, 40 angeschlossen werden können, also Teilnehmer, die die Telegramm-Fragmente selber zusammensetzen können.

Die Konfiguration des Automatisierungsnetzwerkes kann durch den Master-Teilnehmer erfolgen, wenn das Feldbus-System nach dem Master-Slave-Prinzip arbeitet. Der Master-Teilnehmer kann dann auch so ausgelegt sein, dass der Master-Teilnehmer beim Hochfahren des Automatisierungsnetzwerkes mit Hilfe von Telegrammen 3 an die Verteilerknoten 1, 2 die Zuordnungstabellen 206 übermittelt, in denen festgehalten ist, ob an ein an eine Ein-/Ausgabe-Schnittstelle 101, 102, 103, 201, 202, 203, 204 angeschlossener Teilnehmer das Fragmentierungsverfahren im Automatisierungsnetzwerk unterstützt oder nicht. Auch besteht die Möglichkeit, dass dann, wenn zum Beispiel im Rahmen einer Plug-In-Technik Teilnehmer 6 im Netzwerkesegment hinzugefügt oder entfernt werden, der Master-Teilnehmer die Verteilerknoten 1, 2 über diese Änderung, insbesondere über die Fähigkeit informiert, ob der neue Teilnehmer 6 das Fragmentierungsverfahren unterstützt oder nicht.

Alternativ zu einer Feststellung der Fragmentierfähigkeit der Teilnehmer 6 im Automatisierungsnetzwerk durch den Master-Teilnehmer im Rahmen einer Master-Slave-Struktur kann auch der Verteilerknoten 2 selbst beispielsweise über eine Punkt-zu-Punkt-Abfrage ermitteln, ob ein an eine erste bis vierte Ein-/Ausgabe-Schnittstelle 201, 202, 203, 204 des Verteilerknotens 2 angeschlossener Teilnehmer 6 das Fragmentierungsverfahren unterstützt oder nicht. Dies kann im Rahmen des Hochfahrens des Automatisierungsnetzwerkes erfolgen oder auch im laufenden Betrieb dann, wenn der Verteilerknoten 2 feststellt, dass ein Teilnehmerwechsel in einem, an eine erste bis vierte Ein-/Ausgabe-Schnittstelle 201, 202, 203, 204 angeschlossenen Netzwerkesegment erfolgt ist. Eine Veränderung in einem Netzwerkesegment kann der Verteilerknoten 2 beispielsweise über die zugeordnete erste bis vierte Ein-/Ausgabe-Schnittstelle 201, 202, 203, 204 feststellen, wenn durch einen Teilnehmerwechsel der Datenverkehr auf dem Netzwerkesegment unterbrochen wird.

Weiter besteht auch die Möglichkeit das am Verteilerknoten 2 eine Programmiereinrichtung vorgesehen ist, über die in der Zuordnungstabelle 206 im Verteilerknoten 2 festgelegt werden kann ist, ob an ein an eine erste bis vierte Ein-/Ausgabe-Schnittstelle 201, 202, 203, 204 angeschlossener Teilnehmer 6 das Fragmentierungsverfahren im Automatisierungsnetzwerk unterstützt oder nicht.

## Patentansprüche

1. Verteilerknoten (2) für ein Automatisierungsnetzwerk mit mehreren Netzwerkesegmenten, die jeweils zumindest einen Teilnehmer (6) aufweisen, welcher als Fragmentier-Teilnehmer (10, 20, 30, 40) oder als Standard-Teilnehmer (50) ausgebildet sein kann, wobei Fragmentier-Teilnehmer Teilnehmer sind, die ein Fragmentierungsverfahren unterstützen, und Standard-Teilnehmer Teilnehmer sind, die das Fragmentierungsverfahren nicht unterstützen, wobei ein Datenaustausch zwischen den Teilnehmern (6) in Form von Telegrammen (3) erfolgt, wobei die Übertragung der Telegramme (3) gemäß dem Fragmentierungsverfahren in Form von Telegramm-Fragmenten durchgeführt werden kann und wobei im Automatisierungsnetzwerk sowohl Fragmentier-Teilnehmer (10, 20, 30, 40) vorgesehen sein können, die das Fragmentierungsverfahren unterstützen, als auch Standard-Teilnehmer (50) vorgesehen sein können, die das Fragmentierungsverfahren nicht unterstützen,
wobei der Verteilerknoten (2) mehrere Ein-/Ausgabe-Schnittstellen (201, 202, 203, 204) und eine mit den Ein-/Ausgabe-Schnittstellen (201, 202, 203, 204) verbundene Vermittlungseinrichtung (205) aufweist,
wobei wenigstens eine Ein-/Ausgabe-Schnittstelle (201, 202, 203, 204) mit einem Netzwerkesegment in Verbindung steht,
**dadurch gekennzeichnet, dass**
die Vermittlungseinrichtung (205) ausgelegt ist, zu prüfen, ob ein Teilnehmer (6) an der Ein-/Ausgabe-Schnittstelle (201, 202, 203, 204), an den ein Telegramm (3) gesendet werden soll, das Fragmentierungsverfahren unterstützt, und ob das zu sendende Telegramm (3) fragmentiert ist, und
wobei die Vermittlungseinrichtung (205) ausgelegt ist, falls das zu sendende Telegramm (3) fragmentiert ist, die Telegramm-Fragmente (301, 302) zu dem Telegramm (3) zusammenzusetzen und dann an den Teilnehmer (6) zu senden, wenn der Teilnehmer (6) ein Standard-Teilnehmer (50) ist, der das Fragmentierungsverfahren nicht unterstützt.

2. Verteilerknoten (2) nach Anspruch 1, wobei eine Zuordnungstabelle (206) vorgesehen ist, die Kennungen der Standard-Teilnehmer (50) enthält, die das Fragmentierungsverfahren nicht unterstützen, wobei die Vermittlungseinrichtung (205) ausgelegt ist, beim Empfang eines Telegramms (3) eine Kennung des adressierten Teilnehmers (6) zu erfassen und mit den Kennungen der Standard-Teilnehmer (50) in der Zuordnungstabelle (206) zu vergleichen.

3. Verteilerknoten (2) nach Anspruch 1, wobei eine Zuordnungstabelle (206) vorgesehen ist, in der der Ein-/Ausgabe-Schnittstelle (201, 202, 203, 204) mit dem Netzwerkesegment die Information zugeordnet wird, ob über die Ein-/Ausgabe-Schnittstelle fragmentiert gesendet werden darf oder nicht.

4. Verteilerknoten (2) nach Anspruch 2 oder 3, wobei die Vermittlungseinrichtung (205) ausgelegt ist, die Zuordnungstabelle (206) beim Hochfahren des Automatisierungsnetzwerkes anzulegen.

5. Verteilerknoten (2) nach Ansprüche 2 bis 4, wobei die Vermittlungseinrichtung (205) ausgelegt ist, selbständig einen Prüfungsvorgang mit den Teilnehmern (6) in an die Ein-/Ausgabe-Schnittstellen (201, 202, 203, 204) angeschlossenen Netzwerkesegmenten auszuführen, um die Kennungen der Standard-Teilnehmer (50) zu ermitteln, die das Fragmentierungsverfahren nicht unterstützen.

6. Verteilerknoten (2) nach einem der Ansprüche 1 bis 5, wobei der Verteilerknoten (2) ausgelegt ist, Telegramme (3), die für einen Standard-Teilnehmer (50) bestimmt sind, der das Fragmentierungsverfahren nicht unterstützt, vor einem Start des Sendevorgangs an den Standard-Teilnehmer (50) immer erst vollständig zu empfangen.

7. Verteilerknoten (2) nach einem der Ansprüche 1 bis 5, wobei die Vermittlungseinrichtung (205) ausgelegt ist, einen Sendevorgang abzubrechen, wenn das Telegramm (3) fragmentiert ist, und wenn das Telegramm (3) für einen Standard-Teilnehmer (50) bestimmt ist, der das Fragmentierungsverfahren nicht unterstützt, wobei der Standard-Teilnehmer (50) das bereits gesendete Telegramm-Fragment verwirft.

8. Verteilerknoten (2) nach einem der Ansprüche 1 bis 7, wobei die Vermittlungseinrichtung (205) ausgelegt ist, wenn ein Telegramm (3) an einen Standard-Teilnehmer (50) in einem mit einer Ein-/Ausgabe-Schnittstelle (201, 202, 203, 204) verbundene Netzwerkesegment gesendet werden soll, der das Fragmentierungsverfahren nicht unterstützt, das Fragmentierungsverfahren auf das Telegramm (3) nicht anzuwenden.

9. Automatisierungsnetzwerk mit Netzwerkesegmenten, die jeweils zumindest einen Teilnehmer (6) aufweisen, welcher als Fragmentier-Teilnehmer (10, 20, 30, 40) oder als Standard-Teilnehmer (50) ausgebildet sein kann, wobei Fragmentier-Teilnehmer Teilnehmer sind, die ein Fragmentierungsverfahren unterstützen, und Standard-Teilnehmer Teilnehmer sind, die das Fragmentierungsverfahren nicht unterstützen, und zumindest einen Verteilerknoten (2) nach einem der Ansprüche 1 bis 8,
wobei ein Datenaustausch zwischen den Teilnehmern (6) in Form von Telegrammen (3) erfolgt, wobei die Übertragung der Telegramme (3) gemäß dem Fragmentierungsverfahren in Form von Telegramm-Fragmenten (301, 302) durchgeführt werden kann und wobei sowohl Fragmentier-Teilnehmer (10, 20, 30, 40) vorgesehen sein können, die das Fragmentierungsverfahren unterstützen, als auch Standard-Teilnehmer (50) vorgesehen sein können, die das Fragmentierungsverfahren nicht unterstützen.

10. Automatisierungsnetzwerk nach Anspruch 9, wobei ein Teilnehmer (6) als Master-Teilnehmer fungiert, der die weiteren Teilnehmer (6) im Automatisierungsnetzwerk überwacht und den zumindest einen Verteilerknoten (2) informiert, welche Teilnehmer (6) im Automatisierungsnetzwerk, die über ein Netzwerkesegment mit einer Ein-/Ausgabe-Schnittstelle (201, 202, 203, 204) in Verbindung stehen, das Fragmentierungsverfahren nicht unterstützen, wobei die Vermittlungseinrichtung (205) im Verteilerknoten (2) ausgelegt ist, die Zuordnungstabelle (206) entsprechend den vom Master-Teilnehmer erhaltenen Informationen zu aktualisieren.

11. Verfahren zum Übertragen von Telegrammen (3) in einem Automatisierungsnetzwerk mit Netzwerkesegmenten, die jeweils zumindest einen Teilnehmer (6) aufweisen, welcher als Fragmentier-Teilnehmer (10, 20, 30, 40) oder als Standard-Teilnehmer (50) ausgebildet sein kann, wobei Fragmentier-Teilnehmer Teilnehmer sind, die ein Fragmentierungsverfahren unterstützen, und Standard-Teilnehmer Teilnehmer sind, die das Fragmentierungsverfahren nicht unterstützen, und mit zumindest einem Verteilerknoten (2), der mehrere Ein-/Ausgabe-Schnittstellen (201, 202, 203, 204) und eine mit den Ein-/Ausgabe-Schnittstellen (201, 202, 203, 204) verbundene Vermittlungseinrichtung (205) aufweist, wobei wenigstens eine Ein-/Ausgabe-Schnittstelle (201, 202, 203, 204) mit einem Netzwerkesegment in Verbindung steht,
wobei ein Datenaustausch zwischen den Teilnehmern (6) in Form von Telegrammen (3) erfolgt, wobei die Übertragung der Telegramme (3) gemäß dem Fragmentierungsverfahren in Form von Telegramm-Fragmenten (301, 302) durchgeführt werden kann und wobei sowohl Fragmentier-Teilnehmer (10, 20, 30, 40) vorgesehen sein können, die das Fragmentierungsverfahren unterstützen, als auch Standard-Teilnehmer (50) vorgesehen sein können, die das Fragmentierungsverfahren nicht unterstützen,
**dadurch gekennzeichnet, dass**
die Vermittlungseinrichtung (205) im Verteilerknoten (2) prüft, ob ein Teilnehmer (6) an der Ein-/Ausgabe-Schnittstelle (201, 202, 203, 204), an den ein Telegramm (3) gesendet werden soll, das Fragmentierungsverfahren unterstützt, und ob das zu sendende Telegramm (3) fragmentiert ist, und sofern das zu sendende Telegramm (3) fragmentiert ist, die Telegramm-Fragmente (301, 302) zu dem Telegramm (3) zusammensetzt und dann an den Standard-Teilnehmer (50) sendet, der das Fragmentierungsverfahren nicht unterstützt.

12. Verfahren nach Anspruch 11, wobei der zumindest eine Verteilerknoten (2) eine Zuordnungstabelle (206) aufweist, die Kennungen der Standard-Teilnehmer (50) enthält, die das Fragmentierungsverfahren nicht unterstützen, wobei die Vermittlungseinrichtung (205) im Verteilerknoten (2) beim Empfang eines Telegramms (3) eine Kennung des adressierten Teilnehmers (6) erfasst und mit den Kennungen der Standard-Teilnehmer (50) in der Zuordnungstabelle (206) vergleicht.

13. Verfahren nach Anspruch 11, wobei eine Zuordnungstabelle (206) vorgesehen ist, in der der Ein-/Ausgabe-Schnittstelle mit dem Netzwerkesegment die Information zugeordnet wird, ob über die Ein-/Ausgabe-Schnittstelle fragmentiert gesendet werden darf oder nicht.

14. Verfahren nach Anspruch 12 oder 13, wobei ein Teilnehmer (6) als Masterteilnehmer fungiert, der die weiteren Teilnehmer (6) im Automatisierungsnetzwerk überwacht und den zumindest einen Verteilerknoten (2) informiert, welche Teilnehmer (6) im Automatisierungsnetzwerk, die über ein Netzwerkesegment mit einer Ein-/Ausgabe-Schnittstelle (201, 202, 203, 204) in Verbindung stehen, das Fragmentierungsverfahren nicht unterstützen, wobei die Vermittlungseinrichtung (205) im Verteilerknoten (2) die Zuordnungstabelle (206) entsprechend der vom Masterteilnehmer erhaltenen Informationen aktualisiert.

15. Verfahren nach einem der Ansprüche 11 bis 14, wobei der Verteilerknoten (2) einen Sendevorgang abbricht, wenn das Telegramm (3) für einen Standard-Teilnehmer (50) bestimmt ist, der das Fragmentierungsverfahren nicht unterstützt, und wenn das Telegramm (3) fragmentiert ist, wobei der Standard-Teilnehmer (50) das bereits gesendete Telegramm-Fragment (301, 302) verwirft.

## Claims

1. Distribution node (2) for an automation network having multiple network segments that each comprise at least one subscriber (6), which may be in the form of a fragmenting subscriber (10, 20, 30, 40) or in the form of a standard subscriber (50), fragmenting subscribers being subscribers that support a fragmentation method and standard subscribers being subscribers that do not support the fragmentation method,
wherein a data interchange takes place between the subscribers (6) in the form of telegrams (3), wherein the telegrams (3) can be transmitted in accordance with the fragmentation method in the form of telegram fragments and wherein there may be provision in the automation network for both fragmenting subscribers (10, 20, 30, 40), which support the fragmentation method, and standard subscribers (50), which do not support the fragmentation method,
wherein the distribution node (2) comprises multiple input/output interfaces (201, 202, 203, 204) and a switching device (205) connected to the input/output interfaces (201, 202, 203, 204),
wherein at least one input/output interface (201, 202, 203, 204) is connected to a network segment,
**characterized in that**
the switching device (205) is designed to check whether a subscriber (6) on the input/output interface (201, 202, 203, 204) to which a telegram (3) is supposed to be sent supports the fragmentation method, and whether the telegram (3) to be sent is fragmented, and
wherein the switching device (205) is designed so as, if the telegram (3) to be sent is fragmented, to assemble the telegram fragments (301, 302) to form the telegram (3) and then to send them to the subscriber (6) if the subscriber (6) is a standard subscriber (50), which does not support the fragmentation method.

2. Distribution node (2) according to Claim 1, wherein there is provision for an association table (206) that contains identifiers of the standard subscribers (50), which do not support the fragmentation method, the switching device (205) being designed so as, on receiving a telegram (3), to detect an identifier of the addressed subscriber (6) and to compare said identifier with the identifiers of the standard subscribers (50) in the association table (206) .

3. Distribution node (2) according to Claim 1, wherein there is provision for an association table (206) in which the input/output interface (201, 202, 203, 204) with the network segment is assigned the information regarding whether or not the input/output interface can be used for fragmented sending.

4. Distribution node (2) according to Claim 2 or 3, wherein the switching device (205) is designed to create the association table (206) when the automation network is started up.

5. Distribution node (2) according to Claims 2 to 4, wherein the switching device (205) is designed to independently perform a checking process with the subscribers (6) in network segments connected to the input/output interfaces (201, 202, 203, 204) in order to determine the identifiers of the standard subscribers (50), which do not support the fragmentation method.

6. Distribution node (2) according to one of Claims 1 to 5, wherein the distribution node (2) is designed to always receive telegrams (3) intended for a standard subscriber (50), which does not support the fragmentation method, completely first before starting the sending process to the standard subscriber (50).

7. Distribution node (2) according to one of Claims 1 to 5, wherein the switching device (205) is designed to terminate a sending process if the telegram (3) is fragmented and if the telegram (3) is intended for a standard subscriber (50), which does not support the fragmentation method, the standard subscriber (50) rejecting the telegram fragment already sent.

8. Distribution node (2) according to one of Claims 1 to 7, wherein the switching device (205) is designed so as, if a telegram (3) is supposed to be sent to a standard subscriber (50), which does not support the fragmentation method, in a network segment connected to an input/output interface (201, 202, 203, 204), not to apply the fragmentation method to the telegram (3).

9. Automation network having network segments that each comprise at least one subscriber (6), which may be in the form of a fragmenting subscriber (10, 20, 30, 40) or in the form of a standard subscriber (50), fragmenting subscribers being subscribers that support a fragmentation method and standard subscribers being subscribers that do not support the fragmentation method, and at least one distribution node (2) according to one of Claims 1 to 8,
wherein a data interchange takes place between the subscribers (6) in the form of telegrams (3), wherein the telegrams (3) can be transmitted in accordance with the fragmentation method in the form of telegram fragments (301, 302) and wherein there may be provision for both fragmenting subscribers (10, 20, 30, 40), which support the fragmentation method, and standard subscribers (50), which do not support the fragmentation method.

10. Automation network according to Claim 9, wherein one subscriber (6) acts as master subscriber, which monitors the other subscribers (6) in the automation network and informs the at least one distribution node (2) of which subscribers (6) in the automation network that are connected to an input/output interface (201, 202, 203, 204) via a network segment do not support the fragmentation method, the switching device (205) in the distribution node (2) being designed to update the association table (206) in accordance with the information received from the master subscriber.

11. Method for transmitting telegrams (3) in an automation network having network segments that each comprise at least one subscriber (6), which may be in the form of a fragmenting subscriber (10, 20, 30, 40) or in the form of a standard subscriber (50), fragmenting subscribers being subscribers that support a fragmentation method and standard subscribers being subscribers that do not support the fragmentation method, and having at least one distribution node (2) that comprises multiple input/output interfaces (201, 202, 203, 204) and a switching device (205) connected to the input/output interfaces (201, 202, 203, 204), at least one input/output interface (201, 202, 203, 204) being connected to a network segment,
wherein a data interchange takes place between the subscribers (6) in the form of telegrams (3), wherein the telegrams (3) can be transmitted in accordance with the fragmentation method in the form of telegram fragments (301, 302) and wherein there may be provision for both fragmenting subscribers (10, 20, 30, 40), which support the fragmentation method, and standard subscribers (50), which do not support the fragmentation method,
**characterized in that**
the switching device (205) in the distribution node (2) checks whether a subscriber (6) on the input/output interface (201, 202, 203, 204) to which a telegram (3) is supposed to be sent supports the fragmentation method, and whether the telegram (3) to be sent is fragmented, and, provided that the telegram (3) to be sent is fragmented, assembles the telegram fragments (301, 302) to form the telegram (3) and then sends them to the standard subscriber (50), which does not support the fragmentation method.

12. Method according to Claim 11, wherein the at least one distribution node (2) comprises an association table (206) that contains identifiers of the standard subscribers (50), which do not support the fragmentation method, the switching device (205) in the distribution node (2), on receiving a telegram (3), detecting an identifier of the addressed subscriber (6) and comparing said identifier with the identifiers of the standard subscribers (50) in the association table (206) .

13. Method according to Claim 11, wherein there is provision for an association table (206) in which the input/output interface with the network segment is assigned the information regarding whether or not the input/output interface can be used for fragmented sending.

14. Method according to Claim 12 or 13, wherein one subscriber (6) acts as master subscriber, which monitors the other subscribers (6) in the automation network and informs the at least one distribution node (2) of which subscribers (6) in the automation network that are connected to an input/output interface (201, 202, 203, 204) via a network segment do not support the fragmentation method, the switching device (205) in the distribution node (2) updating the association table (206) in accordance with the information received from the master subscriber.

15. Method according to one of Claims 11 to 14, wherein the distribution node (2) terminates a sending process if the telegram (3) is intended for a standard subscriber (50), which does not support the fragmentation method, and if the telegram (3) is fragmented, the standard subscriber (50) rejecting the telegram fragment (301, 302) already sent.

## Revendications

1. Nœud de distribution (2) pour un réseau d'automatisation comprenant plusieurs segments de réseau, lesquels possèdent respectivement au moins un périphérique (6), lequel peut être configuré en tant que périphérique fragmenté (10, 20, 30, 40) ou en tant que périphérique standard (50), les périphériques fragmentés étant des périphériques qui prennent en charge un procédé de fragmentation et les périphériques standard étant des périphériques qui ne prennent pas en charge un procédé de fragmentation,
un échange de données entre les périphériques (6) s'effectuant sous la forme de télégrammes (3), la transmission des télégrammes (3) pouvant être réalisée conformément au procédé de fragmentation sous la forme de fragments de télégramme et aussi bien des périphériques fragmentés (10, 20, 30, 40), qui prennent en charge le procédé de fragmentation, que des périphériques standard (50), qui ne prennent pas en charge le procédé de fragmentation, pouvant être prévus dans le réseau d'automatisation,
le nœud de distribution (2) possédant plusieurs interfaces d'entrée/sortie (201, 202, 203, 204) et un dispositif de commutation (205) relié aux interfaces d'entrée/sortie (201, 202, 203, 204),
au moins une interface d'entrée/sortie (201, 202, 203, 204) étant en liaison avec un segment de réseau,
**caractérisé en ce que**
le dispositif de commutation (205) est conçu pour vérifier si un périphérique (6) sur l'interface d'entrée/sortie (201, 202, 203, 204), auquel doit être envoyé un télégramme (3) prend en charge le procédé de fragmentation et si le télégramme (3) à envoyer est fragmenté, et
le dispositif de commutation (205) étant conçu pour, dans le cas où le télégramme (3) à envoyer est fragmenté, assembler les fragments de télégramme (301, 302) en le télégramme (3) et l'envoyer ensuite au périphérique (6) lorsque le périphérique (6) est un périphérique standard (50) qui ne prend pas en charge le procédé de fragmentation.

2. Nœud de distribution (2) selon la revendication 1, un tableau d'affectation (206) étant prévu, lequel contient les identificateurs des périphériques standard (50) qui ne prennent pas en charge le procédé de fragmentation, le dispositif de commutation (205) étant conçu pour, lors de la réception d'un télégramme (3), détecter un identificateur du périphérique (6) auquel il est adressé et le comparer avec les identificateurs des périphériques standard (50) dans le tableau d'affectation (206) .

3. Nœud de distribution (2) selon la revendication 1, un tableau d'affectation (206) étant prévu, dans lequel l'information selon laquelle un envoi fragmenté par le biais de l'interface d'entrée/sortie (201, 202, 203, 204) est autorisé ou non est affectée à l'interface d'entrée/sortie comprenant le segment de réseau.

4. Nœud de distribution (2) selon la revendication 2 ou 3, le dispositif de commutation (205) étant conçu pour créer le tableau d'affectation (206) lors de la mise en marche du réseau d'automatisation.

5. Nœud de distribution (2) selon les revendications 2 à 4, le dispositif de commutation (205) étant conçu pour exécuter automatiquement une opération de contrôle avec les périphériques (6) dans les segments de réseau raccordés aux interfaces d'entrée/sortie (201, 202, 203, 204), afin d'identifier l'identificateur des périphériques standard (50) qui ne prennent pas en charge le procédé de fragmentation.

6. Nœud de distribution (2) selon l'une des revendications 1 à 5, le nœud de distribution (2) étant conçu pour recevoir toujours tout d'abord en entier les télégrammes (3) qui sont destinés à un périphérique standard (50) qui ne prend pas en charge le procédé de fragmentation, avant un début de l'opération d'envoi au périphérique standard (50).

7. Nœud de distribution (2) selon l'une des revendications 1 à 5, le dispositif de commutation (205) étant conçu pour interrompre une opération d'envoi lorsque le télégramme (3) est fragmenté et lorsque le télégramme (3) est destiné à un périphérique standard (50) qui ne prend pas en charge le procédé de fragmentation, le périphérique standard (50) rejetant le fragment de télégramme déjà envoyé.

8. Nœud de distribution (2) selon l'une des revendications 1 à 7, le dispositif de commutation (205) étant conçu pour, lorsqu'un télégramme (3) doit être envoyé à un périphérique standard (50), qui ne prend pas en charge le procédé de fragmentation, dans un segment de réseau raccordé à une interface d'entrée/sortie (201, 202, 203, 204), ne pas appliquer le procédé de fragmentation au télégramme (3).

9. Réseau d'automatisation comprenant des segments de réseau, lesquels possèdent respectivement au moins un périphérique (6), lequel peut être configuré en tant que périphérique fragmenté (10, 20, 30, 40) ou en tant que périphérique standard (50), les périphériques fragmentés étant des périphériques qui prennent en charge un procédé de fragmentation et les périphériques standard étant des périphériques qui ne prennent pas en charge un procédé de fragmentation, et au moins un nœud de distribution (2) selon l'une des revendications 1 à 8,
un échange de données entre les périphériques (6) s'effectuant sous la forme de télégrammes (3), la transmission des télégrammes (3) pouvant être réalisée conformément au procédé de fragmentation sous la forme de fragments de télégramme (301, 302) et aussi bien des périphériques fragmentés (10, 20, 30, 40), qui prennent en charge le procédé de fragmentation, que des périphériques standard (50), qui ne prennent pas en charge le procédé de fragmentation, pouvant être prévus.

10. Réseau d'automatisation selon la revendication 9, un périphérique (6) faisant office de périphérique maître, lequel surveille les autres périphériques (6) dans le réseau d'automatisation et informe l'au moins un nœud de distribution (2) à propos des périphériques (6) dans le réseau d'automatisation, qui sont en liaison avec une interface d'entrée/sortie (201, 202, 203, 204) par le biais d'un segment de réseau, qui ne prennent pas en charge le procédé de fragmentation, le dispositif de commutation (205) dans le nœud de distribution (2) étant conçu pour actualiser le tableau d'affectation (206) en fonction des informations reçues de la part du périphérique maître.

11. Procédé de transmission de télégrammes (3) dans un réseau d'automatisation comprenant des segments de réseau, lesquels possèdent respectivement au moins un périphérique (6), lequel peut être configuré en tant que périphérique fragmenté (10, 20, 30, 40) ou en tant que périphérique standard (50), les périphériques fragmentés étant des périphériques qui prennent en charge un procédé de fragmentation et les périphériques standard étant des périphériques qui ne prennent pas en charge un procédé de fragmentation, et au moins un nœud de distribution (2) qui possède plusieurs interfaces d'entrée/sortie (201, 202, 203, 204) et un dispositif de commutation (205) relié aux interfaces d'entrée/sortie (201, 202, 203, 204), au moins une interface d'entrée/sortie (201, 202, 203, 204) étant en liaison avec un segment de réseau,
un échange de données entre les périphériques (6) s'effectuant sous la forme de télégrammes (3), la transmission des télégrammes (3) pouvant être réalisée conformément au procédé de fragmentation sous la forme de fragments de télégramme (301, 302) et aussi bien des périphériques fragmentés (10, 20, 30, 40), qui prennent en charge le procédé de fragmentation, que des périphériques standard (50), qui ne prennent pas en charge le procédé de fragmentation, pouvant être prévus, **caractérisé en ce que**
le dispositif de commutation (205) dans le nœud de distribution (2) vérifie si un périphérique (6) sur l'interface d'entrée/sortie (201, 202, 203, 204), auquel doit être envoyé un télégramme (3), prend en charge le procédé de fragmentation et si le télégramme (3) à envoyer est fragmenté, et dans la mesure où le télégramme (3) à envoyer est fragmenté, assemble les fragments de télégramme (301, 302) en le télégramme (3) et l'envoie ensuite au périphérique standard (50) qui ne prend pas en charge le procédé de fragmentation.

12. Procédé selon la revendication 11, l'au moins un nœud de distribution (2) possédant un tableau d'affectation (206), lequel contient les identificateurs des périphériques standard (50) qui ne prennent pas en charge le procédé de fragmentation, le dispositif de commutation (205) dans le nœud de distribution (2), lors de la réception d'un télégramme (3), détectant un identificateur du périphérique (6) auquel il est adressé et le comparant avec les identificateurs des périphériques standard (50) dans le tableau d'affectation (206) .

13. Procédé selon la revendication 11, un tableau d'affectation (206) étant prévu, dans lequel l'information selon laquelle un envoi fragmenté par le biais de l'interface d'entrée/sortie est autorisé ou non est affectée à l'interface d'entrée/sortie comprenant le segment de réseau.

14. Procédé selon la revendication 12 ou 13, un périphérique (6) faisant office de périphérique maître, lequel surveille les autres périphériques (6) dans le réseau d'automatisation et informe l'au moins un nœud de distribution (2) à propos des périphériques (6) dans le réseau d'automatisation, qui sont en liaison avec une interface d'entrée/sortie (201, 202, 203, 204) par le biais d'un segment de réseau, qui ne prennent pas en charge le procédé de fragmentation, le dispositif de commutation (205) dans le nœud de distribution (2) actualisant le tableau d'affectation (206) en fonction des informations reçues de la part du périphérique maître.

15. Procédé selon l'une des revendications 11 à 14, le nœud de distribution (2) interrompant une opération d'envoi lorsque le télégramme (3) est destiné à un périphérique standard (50) qui ne prend pas en charge le procédé de fragmentation et lorsque le télégramme (3) est fragmenté, le périphérique standard (50) rejetant le fragment de télégramme (301, 302) déjà envoyé.
